# EUROPEAN PATENT SPECIFICATION

(11) **EP 1 362 730 B1**
(45) Date of publication and mention of the grant of the patent: **08.11.2006**
(21) Application number: 03011255.1
(22) Date of filing: 16.05.2003
(51) Int. Cl.: B60J 5/06, B60J 10/06, B60J 1/16

(54) **Slidable side door structure for vehicle**
Aufbau für eine Schiebeseitentür für Fahrzeuge
Structure de porte latérale coulissante pour véhicules

(30) Priority: 17.05.2002 JP 2002143732
(43) Date of publication of application: 19.11.2003
(73) Proprietor: Mazda Motor Corporation, Aki-gun, Hiroshima 730-8670 (JP)
(72) Inventor: Kinnou, Kenji, c/o Mazda Motor Corporation, Hiroshima 730-8670 (JP)
(74) Representative: Müller-Boré & Partner Patentanwälte

(56) References cited:
- DE-A- 4 325 501
- US-A- 4 835 908
- US-B1- 6 430 875
- PATENT ABSTRACTS OF JAPAN vol. 1997, no. 10, 31 October 1997 (1997-10-31) -& JP 09 142142 A (HONDA MOTOR CO LTD), 3 June 1997 (1997-06-03)

## Description

The present invention relates to a side door structure in which a side door is slidably mounted on at least one side of a vehicle body for movement in a lengthwise direction for opening and closing a side door opening as an access opening or doorway, and, more particularly, to a slidable side door structure in which a side door slidably mounted on one side of a vehicle body has a window glass that is movable up and down to close and open an upper portion of a side door opening as a door window opening while the side door is in the side door opening to close a lower portion of the side door opening.

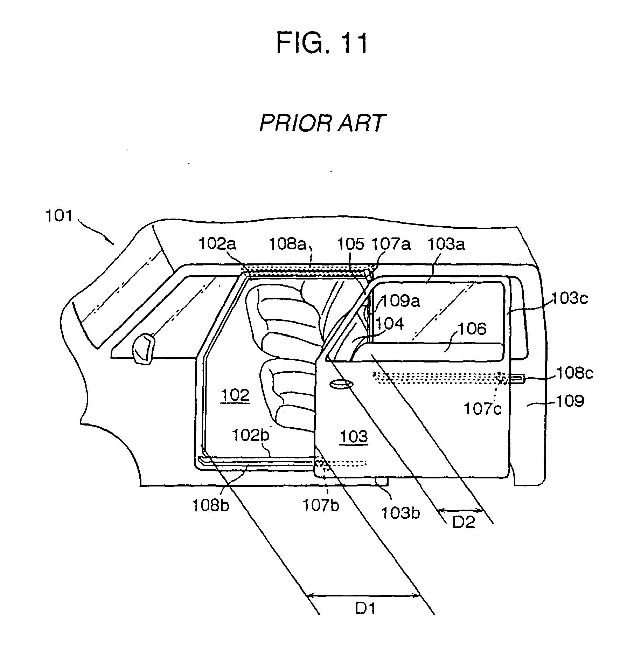

Typically, a slidable side door structure for an automotive vehicle such as shown in Figure 11 has a side door 103 slidably mounted on one side of a vehicle body 101 for movement between a closed position in a side door opening 102 formed as an access opening in a side wall 109 of the vehicle body 101 and an open position wherein the slidable side door 103 extends along the outer surface of the vehicle side wall 109 to fully expose the access opening. The slidable side door 103 has a door window opening 104 formed and defined by a window sash 105 and a window glass 106 movable up and down. Such a side door structure is known from, for example, Japanese Unexamined Patent Publication No. 2000-160933.

The prior art slidable side door 103 is provided with three guide rollers, namely an upper front guide roller 107, a middle rear guide roller 107c and a lower front guide roller 107b, which are secured to the slidable side door 103 at upper, rear and lower locations sides103a, 103c and 103b, respectively. These guide rollers 107a, 107b and 107c are slidably connected to an upper guide track 108a located at an upper portion 102a of the side door opening 102 (near the vehicle roof), a lower guide track 108b located at a lower portion 102b of the side door opening 102 (near the sill area) and a middle guide track 108c located in a rear fender panel 109 adjacent to the side door opening 102, respectively. The slidable side door 103 slidably moves between the closed position and the open poison through slidable connection of the guide rollers 107a, 107b and 107c to the guide tracks 108a, 108b and 108c, respectively.

In the case where the slidable side door 103 is either provided with a window glass 106 retractable within the slidable side door 3 or not provided with no window glass to always expose the door window opening 104, a possible risk that an occupant is confronted with is that, if the slidable side door 103 is moved to the open position while an occupant puts a part of the occupant's body, e.g. a hand or a head, out of the door window opening 104, the occupant gets the part of the occupant's body caught between the door sash 105 and a front end 109a of the rear side fender 109 that forms a rear end portion 102c of the side door opening 102. This risk is conceivably eliminated by restricting a maximum moving distance of the slidable side door 103 to a distance D1 less than a full width of the side door opening 102 so as to leave a space distance D2 between the door sash 105 and the front end 109a of the rear side fender 109.

However, the slidable side door 103 having a window sash 105 that is restricted in moving distance so as to eliminate the risk makes the doorway narrow and results in inconvenience of getting on and off the vehicle.

JP 09 142 142 A discloses a side door structure for a vehicle in which a door panel and a door glass are supported for forward and rearward movement by guide rails. The door glass is supported independent from the door panel by further guide rails, so that the door glass can move forward and rearward relative to and independent from the door panel.

It is therefore an object of the present invention to provide a slidable side door structure for a vehicle for ensuring the safety of an occupant in the vehicle and providing an occupant with facilities for getting on and off the vehicle through a side door opening as an access opening in which a side door slidably mounted on the vehicle is provided with a retractable window glass that closes and opens an upper portion of the side door opening forming a door window opening above the side door in a closed position and no portion of the slidable side door opening remains covered when the slidable side door is in a fully opened position.

The foregoing objects of the present invention are achieved by a slidable side door structure comprising a side door with a retractable window glass slidably mounted on at least one side of a vehicle body for movement in a lengthwise direction of the vehicle body between a closed position in a side door opening formed as an access opening in the side of the vehicle body wherein a lower portion of the side door opening is closed by the side door and an upper portion of the side door opening forming a door window opening is closed when the window glass is protruded fully from the side door and opened when the window glass is retracted, partly or fully, into the side door and an open position wherein the side door extends along an outer surface of the vehicle body to expose or uncover the access opening. The slidable side door structure has sealing means such as a whether strip for sealing up the door window opening closed by the window glass water-tightly that is mounted to part of the vehicle body surrounding the door window opening so as to be brought into close contact with a fringe of the window glass when the window glass is protruded from the side door.

The slidable side door structure brings a light-weight slidable side door to realization and avoids the need to restrict a moving distance of the slidable side door resulting from having no door sash, ensuring the safety of an occupant in the vehicle and providing an occupant with facilities for getting on and off the vehicle. In addition, the slidable side door structure having no door guide truck near a head jamb or transom of the side door opening improves vision through around the side door window and increases the degree of vehicle door design.

The slidable side door structure includes door guide means for guiding movement of the side door which comprises upper and lower door side guide tracks mounted in parallel with each other to the side door with a vertical separation, upper and lower body side guide tracks mounted in parallel with each other to the vehicle side body with a vertical separation, upper and lower door side guide roller assemblies fixedly mounted to the side door and slidably connected to the upper and lower door side guide tracks, respectively, and upper and lower door side guide roller assemblies fixedly mounted to the side door and slidably connected to the upper and lower body side guide tracks, respectively. The guiding means slidably mounts the side door to the vehicle body at four different locations, so as to achieve improved supporting rigidity of the side door. In consequence, the side door itself is allowed to have comparatively low structural rigidity. This realizes a light-weight side door.

The side door has an interior space therein for receiving at least partly the window glass and an window regulator operative to protrude the window glass from the interior space and retract the window glass into the interior space. The side door thus structured enables an occupant in the vehicle to protrude and retract a comparatively large and heavy window glass effortlessly.

In the slidable side door structure, the upper and lower body side guide tracks may be mounted to a rear fender panel forming part of the vehicle side body adjacent to the side door opening and a bottom jamb forming the side door opening near the sill area, respectively. Specifically, the upper and lower body side guide trucks are located in different positions shifted in a lengthwise direction of the vehicle body from the front to the back. Accordingly, the side door is supported to the vehicle body in different positions shifted in both vertical and lengthwise directions. This reinforces the supporting rigidity of the side door.

Further, the upper and lower body side guide roller assemblies may be mounted to a rear side jamb forming the side door opening with a vertical separation below a top edge of the side door. This provides a large space for the door window opening.

The upper and lower door side guide tracks may be installed within the interior of the side door. This allows the side door to have an unrelieved surface, which leads to design improvement.

Furthermore, the upper and lower door side guide roller assemblies may be mounted to the side door at locations near an upper rear end corner and near a lower front end corner, respectively. Specifically, the upper and lower door side guide roller assemblies are located diagonally on the side door. Accordingly, the upper and lower door side guide roller assemblies can be separated by possible largest distanced in both vertical and lengthwise directions, so as to reinforce the supporting rigidity of the side door.

According to the slidable side door structure of the present invention in which the door window opening above the side door is opened and closed by the window glass, the side door is not restricted moving distance resulting from having no door sash while ensuring the safety of an occupant in the vehicle and providing an occupant with facilities for getting on and off the vehicle.

The above and other objects and features of the present invention will be clearly understood from the following detailed description when read with reference to the accompanying drawings, wherein the same numeral numbers have been used to denote same or similar parts or mechanisms throughout the drawings and in which:
Figure 1 is a side view of a vehicle body having a slidable side door structure according to a preferred embodiment of the present invention in which a side door is in a closed position;
Figure 2 is a side view of the vehicle body with the side door in an open position;
Figure 3 is a side view showing a window glass retracting structure of the side door;
Figure 4 is a cross-sectional view of a sealing strip between a stationary window glass of a front body and a retractable window glass taken along line IV-IV of Figure 1;
Figure 5 is a cross-sectional view of a sealing strip between a stationary vehicle roof and the retractable window glass taken along line V-V of Figure 1;
Figure 6 is cross-sectional view of a sealing strip between a rear body portion and the retractable window glass taken along line VI-VI of Figure 1;
Figure 7 is a perspective view of the side door separated from the vehicle body;
Figure 8A is a perspective view of a guide roller and its associated structure mounted to the vehicle body;
Figure 8B is a cross-sectional view of a door guide structure taken along line VIII-VIII of Figure 2;
Figure 9A is a perspective view of a lower front guide roller and its associated structure mounted to the side door;
Figure 9B is a cross-sectional view of the door guide structure taken along line IX-IX of Figure 2;

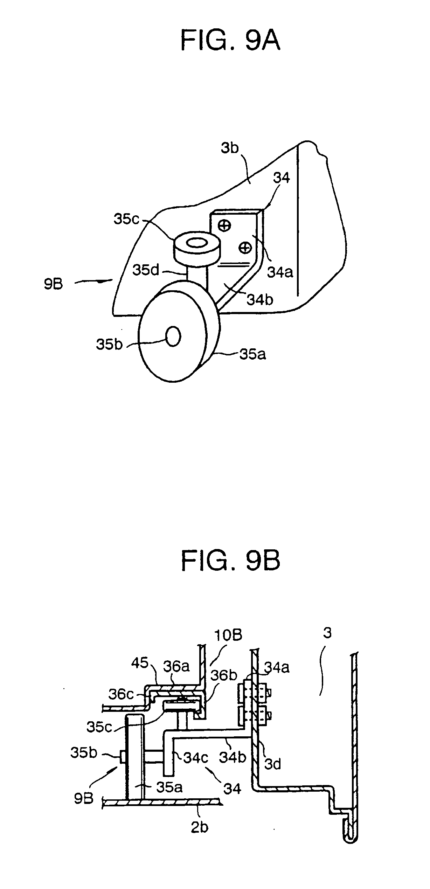

Figure 9A is a perspective view of an upper rear guide roller and its associated structure mounted to the side door;

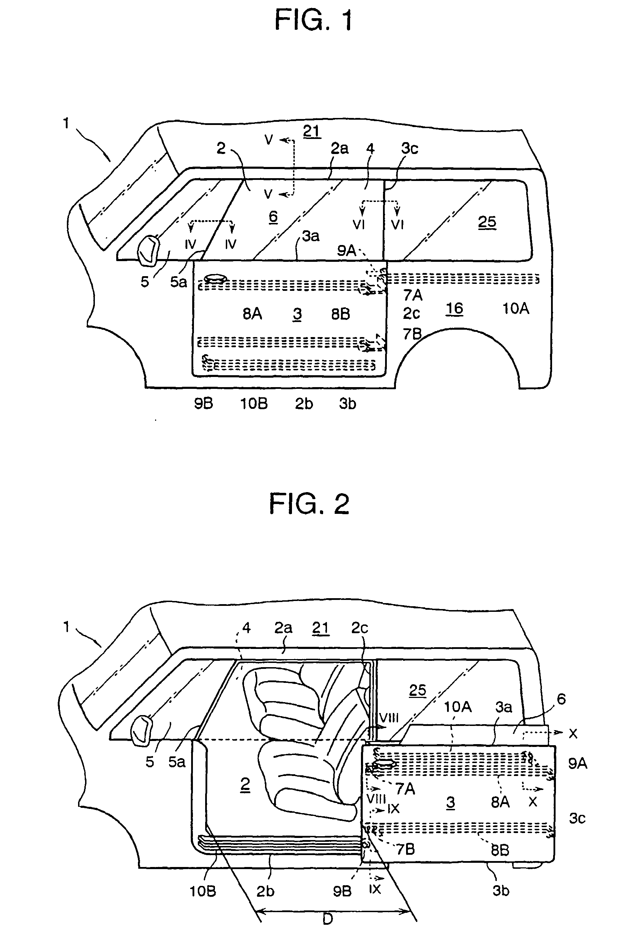

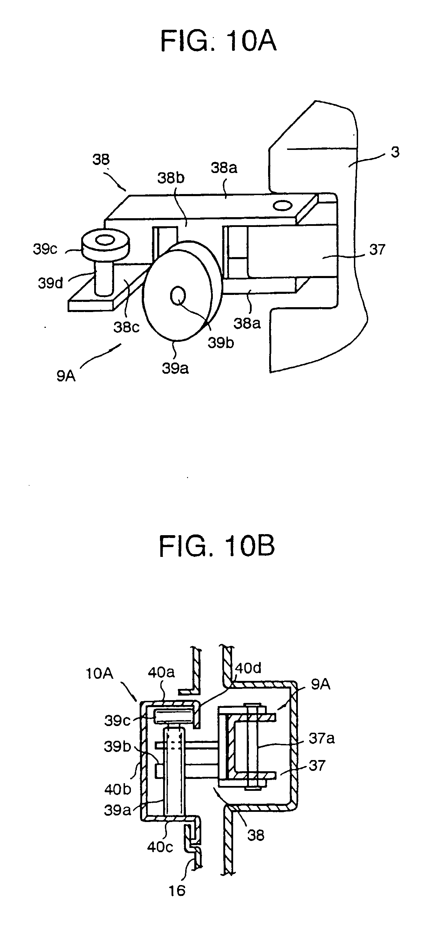

Figure 10B is a cross-sectional view of the door guide structure taken along line X-X of Figure 2; and
Figure 11 is a side view of a vehicle body having a conventional side door.

Referring to the drawings in detail, and, in particular, to Figures 1 and 2 showing a vehicle body 1 quipped with a slidable side door structure according to an embodiment of the present invention, the vehicle body 1 has a side door 3 slidably mounted for movement between a closed position in a side door opening 2 formed as an access opening as shown in Figure 1 and an open position wherein the side door 3 extends along the outer surface of a rear fender panel 16 to expose the access opening 2 as shown in Figure 2. The side door opening 2 is formed by a rear edge 5a of a stationary front side window glass 5, a head jamb or transom 2a, a side jamb 2c and a bottom jamb 2b. The side door 3 is provided with a motor driven retractable window glass 6 movably mounted for movement between a closed or protruded position wherein the window glass 6 extends in an upper half of the side door opening (which is referred to as a door window opening) 4 as shown in Figure 1 and an open or retracted position wherein the window glass 6 is in the side door 3 to expose the door window opening 4 as shown in Figure 2. The door window opening 4 is configured by the rear edge 5a of the stationary front side window glass 5, the head jamb 2a of the side door opening 2, an upper half of the side jamb 2c forming a rear side of the side door opening 2 and an upper edge 3a of the side door 3 in the closed position. The vehicle body 1 is provided with a stationary rear window glass 25.

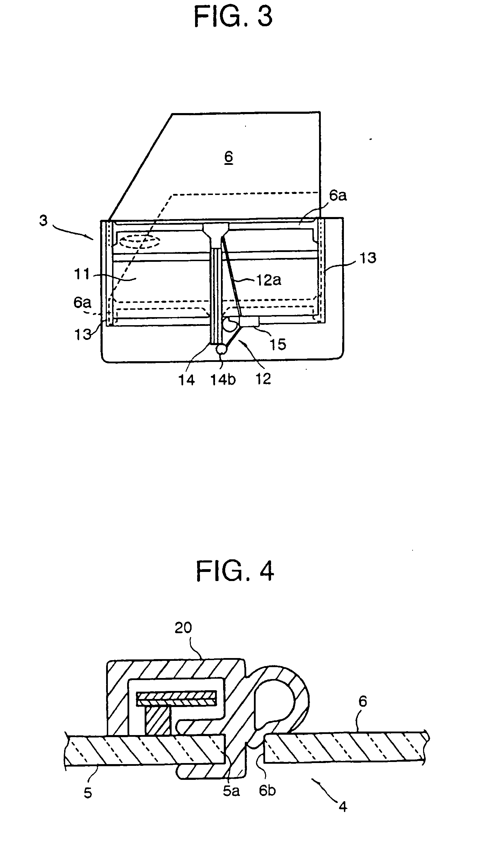

Referring to Figure 3 showing a retracting mechanism for the window glass 6, the side door 3 has an interior space for a window pocket 11 to receive the window glass 6 therein and is provided with a motor-driven window regulator 12 in the interior space or window pocket 11. The window regulator 12, which causes up and down sliding movement of the window glass 6, comprises a pair of vertical guide tracks 13 disposed at opposite ends of the window pocket 11 and a lift track 14 centrally located between the guide tracks 13 in the window pocket 11 of the side door 3. The guide tracks 13 and the lift track 14 guide front and rear ends of a bottom slat 6a of the window glass 6 for up and down sliding movement. The window regulator 12 further comprises a looped lift cord 14a mounted between lift cord pulleys 14b secured to upper and lower ends of the lift track 14 and secured to the bottom slap 6a of the window glass 6 and a motor 15 secured to the lift track 14. The lift cord 14a is pulled up and down by the motor 15 to cause the window glass 6 to protrude from and retract in the window pocket 11 of the side door 3.

Figures 4 to 6 show sealing strip structures between the retractable window glass 6 and the vehicle body 1. As shown in Figure 4 showing a sealing structure between the window glass 6 and a stationary window glass 5 fixedly mounted to a front portion of the vehicle body 1, the window glass 5 has a rear edge 5a formed in conformity with the front edge 6b of the window glass 6. The window glass 5 is provided with a sealing strip 20 such as a whether strip fixedly mounted to the rear edge 5a thereof. The sealing strip 20 is brought into contact with the front edge 6b and its fringe of the window glass 6 in the protruded position to form a water-tight structure between the window glasses 5 and 6.

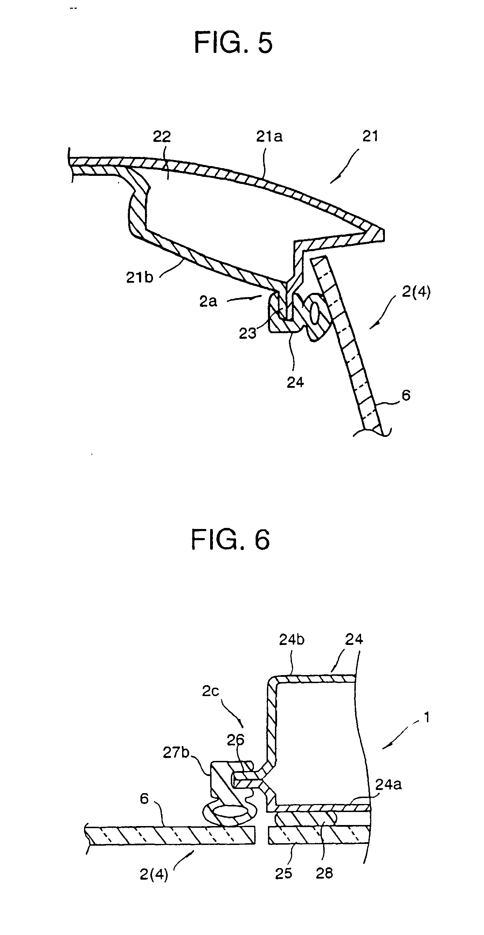

As shown in Figures 5 and 6 showing a sealing structure between the window glass 6 and a vehicle roof and a rear body portion of the vehicle body 1, the vehicle roof is provided with a roof rail 21 located right above the head jamb or transom 2a of the side door opening 2. The roof rail 21 comprises a roof outer panel 21a and a roof inner panel 21b welded or otherwise secured to each other. These roof panels 21a and 21b are shaped so as to form a space 22 therebetween and have flanges forming a mounting bracket 23. The roof rail 21 is provided with a sealing strip 24 such as a whether strip fixedly mounted to the mounting bracket 23 of the rood rail 23. The sealing strip 24 is brought into contact with an upper fringe portion of the window glass 6 in the protruded position to form a water-tight structure between the window glass 5 and the roof rail 21. As shown in Figure 6, the vehicle body 1 at a location immediately after the side door opening 2 has a center pillar 24 comprising a center pillar inner panel 24a and a center pillar outer panel 24b welded to each other. These center pillar panes 24a and 24b have flanges forming a mounting bracket 26 extending along the side jamb 2c forming a rear side of the door window opening 4. The center pillar 24 is provided with a sealing strip 27 such as a whether strip fixedly mounted to the mounting bracket 26 of the center pillar 24. The sealing strip 27 is brought into contact with a rear fringe portion of the window glass 6 in the protruded position to form a water-tight structure between the window glass 5 and the center pillar 24. The mounting brackets 23 and 26 are formed as one integral piece. Similarly, the sealing strips 24 and 27 are formed as one integral piece. As seen in Figure 6, there is provided a sealing strip 28 between the center pillar 24 and the rear stationary window glass 25.

The slidable side door structure of the present invention that has no sash for the window glass 6 allows the side door 3 to slide rearward to expose almost the entire area of the side door opening 2 without leaving a space, such as the space distance D2 provided in order to prevent an occupant from getting his hand or his head caught between the door sash 105 and the rear portion 102c forming the rear end of the side door opening 102 as shown in Figure 11, before the side jamb 2c forming the rear end of the door window opening 4. Specifically, the sliding distance D of the side door 3 is greater than the sliding distance D1 of the conventional side door 103 by the space distance D2 (see Figure 11). Accordingly, the slidable side door structure ensures the safety of an occupant in the vehicle and provides an occupant with facilities for getting on and off the vehicle.

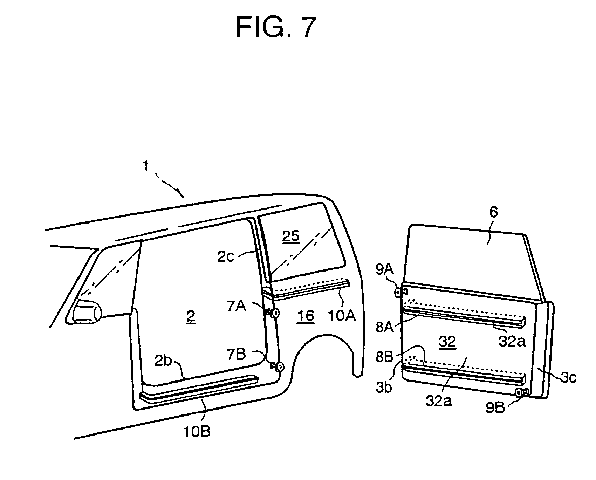

Figure 7 shows door guide structures for mounting the side door 3 to the vehicle body 1 and guiding sliding movement of the side door 3. The side door 3 at its inner side is provided with upper and lower door side guide tracks 8A and 8B extending horizontally in parallel with each other. The upper and lower door side guide tracks 8A and 8B are separated at a sufficient distance from each other. On the other hand, the side jamb 2c forming the side door opening 2 is provided with upper and lower body side guide roller assemblies 7A and 7B correspondingly in position to the upper and lower door side guide tracks 8A and 8B, respectively. These upper and lower body side guide roller assemblies 7A and 7B are slidably connected to the upper and lower door side guide tracks 8A and 8B, respectively. Further, the side door 3 at its inner side is provided with an upper door side guide roller assembly 9A located right above a rear end of the upper door side guide track 8A and a lower door side guide roller assembly 9B located right below a front end of the lower door side guide track 8B. On the other hand, the vehicle body 1 is provided with an upper body side guide track assembly 10A installed to the rear fender panel 16 and a lower body side guide track assembly 10B installed to the bottom jamb 2a of the side door opening 2 correspondingly in position to the upper and lower door side guide roller assemblies 9A and 9B, respectively. These upper and lower door side guide roller assemblies 9A and 9B are slidably connected to the upper and lower body side guide tracks 10A and 10B, respectively.

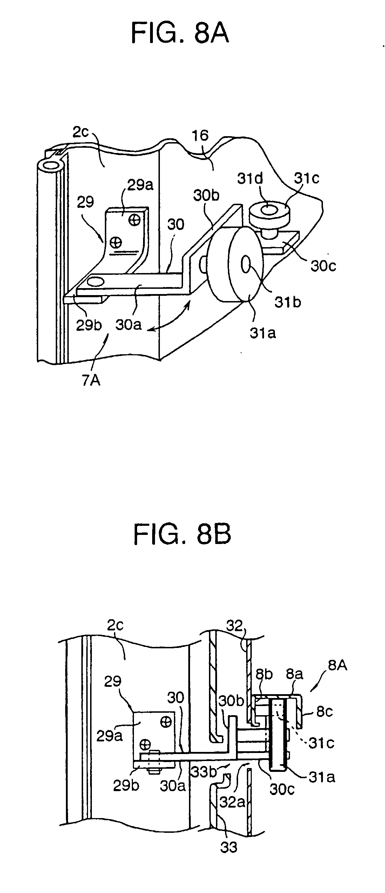

Figures 8A and 8B show details of a door guide structure comprising the body side guide roller assembly 7A, 7B and the door side guide track 8A, 8B. Because the upper and lower door guide structures are identical in structure and operation with each other, the following description will be directed to the upper door guide structure comprising the upper body side guide roller assembly 7A and the upper door side guide track 8A only. As shown, the body side guide roller assembly 7A comprises a guide roller 31a, a positioning roller 31c and a mounting bracket 30 on which the rollers 31a and 31c are mounted for rotation and is installed to the vehicle body 1 through a generally L-shaped bracket 29 secured to a front end of the side jamb 2c forming the rear end of the side door opening 2. Specifically, the generally L-shaped bracket 29 has a vertical base 29a bolted, or otherwise secured, to the side jamb 2c and a horizontal support arm 29b extending forward in the lengthwise direction of the vehicle body 1. The mounting bracket 30 has a horizontal base 30a extending outwardly in a transverse direction of the vehicle body 1, a vertical mounting brace 30b extending in the lengthwise direction along the outer surface of a rear fender panel 16 and a horizontal mounting arm 30c extending from a rear end of the vertical mounting brace 30b in the transverse direction. The mounting bracket 30 is pivotally connected to the generally L-shaped bracket 29. The guide roller 31a is mounted for rotation on a shaft 31b horizontally secured to the vertical mounting brace 30b of the mounting bracket 30. The positioning roller 31c is mounted for rotation on a shaft 31d vertically secured to the horizontal mounting arm 30c of the mounting bracket 30.

As shown in detail in Figure 8A, the door side guide track 8B has a generally reversed U-shaped cross section defined by a horizontal top wall 8a, an inner vertical wall 8b and an outer vertical wall 8c and is installed in the side door 3 with the inner vertical wall 8b welded, or otherwise secured, to a door inner panel 32 so as to receive the guide roller 31a and the positioning roller 31c therein. Further, the door inner panel 32 and a side door trim 33 are formed with guide slots 32a and 33a extending in the lengthwise direction, respectively, so as to receive the mounting bracket 30 therein. As seen in Figures 2 and 7, the door side guide track 8A has an end portion extended to the back 3c of the side door 3. Sliding movement of the side door 3 from the open position to the closed position caused by the guide structure having the door side guide track 8A with the extended end portion guides the side door 3 is such that, when the side door 3 moves forward and approaches the closed position in the side door opening 2, the positioning roller 31c is guided by the door side guide track 8A at the extended end portion and, at the same time, the mounting bracket 30 is forced to turn in a clockwise direction as seen in Figure 8A so as thereby to allow the side door 3 to fit into the side door opening 2. On the other hand, the guide structure guides the side door 3 from the closed position to the open position in a reverse way. That is, when the side door 3 is force rearward, the mounting bracket 30 is forced to turn in a counter clockwise direction so as thereby to heave the side door 3 out of the side door opening 2 and, at the same time, the positioning roller 31c is guided by the door side guide track 8A at the extended end portion. When once the positioning roller 31c leaves the extended end portion of the door side guide track 8A, the guide roller 31a is guided by the door side guide track 8A while the side door 3 moves rearward.

Figures 9A and 9B show details of the lower guide structure comprising the door side guide roller assembly 9B and the body side guide track 10B. As shown, the body side guide roller assembly 9B comprises a guide roller 35a, a positioning roller 35c and a generally L-shaped mounting bracket 34. The generally L-shaped mounting bracket 34 has a vertical base 34a, a horizontal mounting arm 34b horizontally extending from the vertical base 34a and a vertical mounting arm 34c extending downward from an end of the horizontal mounting arm 34b. The mounting bracket 34 at the vertical base 34a is bolted, or otherwise secured, to the back 3b of the side door 3 and supports the guide roller 35a for rotation on a shaft 35b secured to the horizontal mounting arm 34b and the positioning roller 35c for rotation on a shaft 35d secured to the horizontal mounting arm 34a.

As shown in detail in Figure 9B, the body side guide track 10B that is installed to the bottom jamb 2b forming part of the side door opening 2 has a generally reversed U-shaped cross section defined by a horizontal top wall 36a and an inner vertical wall 36c welded, or otherwise secured, to a shoulder portion of a floor panel 45 and an outer vertical wall 36b. The outer vertical wall 36c has a lower flange extending inwardly. As seen in Figures 2 and 7, the body side guide track 10A has a front end portion bent inwardly. The positioning roller 35c is guided by the body guide track 10B keeping contact with the outer vertical wall 36c. Sliding movement of the side door 3 caused by the guide structure having the body side guide track 10B with the bent end portion is such that, when the side door 3 moves forward, the side door 3 is guided through rolling movement of the guide roller 35a on the bottom jamb 2b of the side door opening 2 and, when the side door 3 approaches the closed position in the side door opening 2, by the positioning roller 35c is guided by the body side guide track 10B at the bent end portion to fit into the side door opening 2. On the other hand, when the side door 3 in the side door opening 2 is forced rearward, the positioning roller 31c is guided by the body side guide track 10B at the bent end portion so as thereby to heave the side door 3 out of the side door opening 2. When once the positioning roller 35c leaves the extended end portion of the door side guide track 10B, the side door 3 slides rearward through rolling movement of the guide roller 35a on the bottom jamb 2b while the guide roller 35a is guided by the door side guide track 10B.

Figures 10A and 10B show details of the upper guide structure comprising the door side guide roller assembly 9A and the body side guide track 10A. As shown, the door side guide roller assembly 9A comprises a guide roller 39a, a positioning roller 39c and a generally channel-shaped mounting bracket 38. The mounting bracket 38 has a horizontal base 38a extending in the lengthwise direction, a first vertical mounting arm 38b extending downward from the horizontal support arm 34a and a second horizontal mounting arm 38c extending horizontally from the horizontal base 34a. The mounting bracket 34 at the horizontal base 34a is pivotally mounted to a mounting boss 37 by a vertical pivot shaft 37a. The mounting bracket 34 supports the guide roller 39a for rotation on a shaft 39b secured to the first vertical mounting 38b and the positioning roller 39c for rotation on a shaft 39d secured to the second horizontal mounting arm 38c.

As shown in detail in Figure 10B, the body side guide track 10A that is installed to rear fender panel 16 has a generally channel-shaped cross section defined by a horizontal top wall 40a, a vertical side wall 40b and a horizontal bottom wall 40c. The horizontal top wall 40a has a vertical flange 40d extending downward. The guide roller 39a and the positioning roller 39c are guided by the body side guide track 10A keeping contact with the horizontal bottom wall 40c and the vertical flange 40c, respectively. As seen in Figure 7, the body side guide track 10A has a front end portion bent inwardly along the rear side jamb 2c of the side door opening 2. Sliding movement of the side door 3 from the open position to the closed position caused by the guide structure having the body side guide track 10A with the extended end portion is such that, when the side door 3 moves forward and approaches the closed position in the side door opening 2, the positioning roller 31c is guided by the door side guide track 8A at the extended end portion and, at the same time, the mounting bracket 38 is forced to turn about the vertical pivot shaft 37a so as thereby to allow the side door 3 to fit into the side door opening 2. On the other hand, when the side door 3 is force rearward, the mounting bracket 38 is forced to turn so as thereby to heave the side door 3 out of the side door opening 2 and, at the same time, the positioning roller 39c is guided by the extended end portion of the body side guide track 10A. When once the positioning roller 39c leaves the extended end portion of the door side guide track 8A, the guide roller 39a is guided by the body side guide track 10A while the side door 3 moves rearward.

As described in detail above, the slidable side door structure of the present invention eliminates the possible risk that an occupant in the vehicle gets a body caught between the side door and the front end of the rear side body forming the rear end of the side door opening without leaving the side door opening partly covered and, in addition, provides facilities for getting on and off the vehicle. Furthermore, since the side door is slidably connected to the vehicle body by a pair of door side guide roller assemblies and a pair of body side guide roller assemblies, the side door is slidably supported at always at least three points separated in vertical and lengthwise directions, so that the slidable side door structure provides the side door with high supporting rigidity.

## Claims

1. A slidable side door structure comprising a side door (3) that has a retractable window glass (6) retractable in the side door (3) and is slidably mounted on at least one side of a vehicle body (1) for movement in the lengthwise direction of the vehicle body (1) between a closed position in a side door opening (2) formed as an access opening in a vehicle side wall wherein a lower portion of the side door opening (2) is closed by the side door (3) and an upper portion of the side door opening (2) forming a door window opening (4) is closed when the window glass (6) is protruded fully from the side door (3) and opened when the window glass (6) is retracted, partly or fully, into the side door (3) and an open position wherein the side door (3) extends along an outer surface of the vehicle side wall to expose the access opening, and
door guide means for guiding movement of the side door, the door guide means comprising upper and lower body side guide tracks (10A, 10B) mounted in parallel with each other to the vehicle side wall with a vertical separation, and upper and lower door side guide roller assemblies (9A, 9B) fixedly mounted to the side door (3) and slidably connected to the upper and lower body side guide tracks (10A, 10B), respectively;
**characterized in that**
upper and lower door side guide tracks (8A, 8B) are mounted in parallel with each other to the side door (3) with a vertical separation, upper and lower body side guide roller assemblies (7A, 7B) are fixedly mounted to the body and slidably connected to the upper and lower door side guide tracks (8A, 8B), respectively, and
a sealing strip (20, 24, 27) is provided for sealing up the door window opening (4) closed by the window glass (6) protruded from the side door (3) water-tightly, said sealing strip (20, 24, 27) being mounted to part of the vehicle body (1) surrounding the door window opening (4) so as to be brought into close contact with a fringe of the window glass (6) when the window glass (6) is protruded from the side door (3).

2. A slidable side door structure as defined in claim 1, **characterized in that** the side door (3) has a interior space (11) in an interior thereof for receiving at least partly the window glass (6) retracted and is provided with an window regulator (12) operative to protrude the window glass (6) from the interior space (11) and retract the window glass (6) into the interior space (11).

3. A slidable side door structure as defined in claim 1 or 2, **characterized in that** said upper and lower body side guide tracks (10A, 10B) are mounted to a rear fender panel (16) forming part of the vehicle side wall adjacent rearward to the side door opening and a bottom jamb (2b) forming the side door opening (2), respectively.

4. A slidable side door structure as defined in any one of the preceding claims 1 through 3, **characterized in that** said upper and lower body side guide roller assemblies (7A, 7B) are mounted to a rear side jamb (2c) forming the side door opening (2) below a top edge of the side door (3).

5. A slidable side door structure as defined in any one of the preceding claim 1 through 4, **characterized in that** said upper and lower door side guide tracks (8A, 8B) are installed within the interior of the side door (3).

6. A slidable side door structure as defined in any one of the preceding claim 1 through 5, **characterized in that** said upper and lower door side guide roller assemblies (9A, 9B) are mounted to the side door (3) at locations near a upper rear end corner and near a lower front end corner, respectively.

## Patentansprüche

1. Schiebeseitentürstruktur bzw. gleitbare bzw. schiebbare Seitentürstruktur, umfassend eine Seitentür (3), welche eine zurückziehbare bzw. einziehbare Fensterscheibe bzw. Fensterglas (6) aufweist, welche in die Seitentür (3) zurückziehbar bzw. einziehbar ist, und gleitbar bzw. schiebbar an wenigstens einer Seite eines Fahrzeugkörpers bzw. einer Fahrzeugkarosserie (1) für eine Bewegung in der Längsrichtung des Fahrzeugkörpers (1) zwischen einer geschlossenen Position in einer Seitentüröffnung (2), welche als eine Zutrittsöffnung in einer Fahrzeugseitenwand ausgebildet ist, wobei ein unterer Abschnitt der Seitentüröffnung (2) durch die Seitentür (3) geschlossen ist und ein oberer Abschnitt der Seitentüröffnung (2), welcher eine Türfensteröffnung (4) ausbildet, geschlossen ist, wenn die Fensterscheibe (6) vollständig aus der Seitentür (3) vorragt bzw. ausgetreten ist, und geöffnet ist, wenn die Fensterscheibe (6) teilweise oder vollständig in die Seitentür (3) zurückgezogen ist, und einer offenen Position montiert bzw. angeordnet ist, wobei sich die Seitentür (3) entlang einer äußeren Oberfläche der Fahrzeugseitenwand erstreckt, um die Zutrittsöffnung freizulegen, und Türführungsmittel für ein Führen einer Bewegung der Seitentür, wobei die Türführungsmittel obere und untere körperseitige bzw. Körperseiten-Führungsschienen (10A, 10B), welche parallel zueinander an der Fahrzeugseitenwand mit einer vertikalen Trennung montiert bzw. angeordnet sind, und obere und untere türseitige bzw. Türseiten-Führungsrollenanordnungen (9A, 9B) umfassen, welche fix an der Seitentür (3) montiert sind und schiebbar mit den oberen und unteren körperseitigen Führungsschienen (10A, 10B) jeweils verbunden sind;
**dadurch gekennzeichnet, daß**
obere und untere türseitige bzw. Türseiten-Führungsschienen (8A, 8B) parallel zueinander an der Seitentür (3) mit einer vertikalen Trennung montiert sind, obere und untere körperseitige bzw. Körperseiten-Führungsrollenanordnungen (7A, 7B) fixiert bzw. festgelegt an dem Körper montiert und schiebbar mit den oberen und unteren türseitigen Führungsschienen (8A, 8B) jeweils verbunden sind, und
ein Abdichtstreifen (20, 24, 27) für ein wasserdichtes Abdichten der Türfensteröffnung (4) vorgesehen ist, welche durch die Fensterscheibe (6) geschlossen ist bzw. wird, welche aus der Seitentür (3) vorragt, wobei der Abdichtstreifen (20, 24, 27) an einem Teil des Fahrzeugkörpers (1) montiert ist, welches die Türfensteröffnung (4) umgibt, um in unmittelbaren bzw. nahen Kontakt mit einem Rand der Fensterscheibe (6) gebracht zu werden, wenn die Fensterscheibe (6) aus der Seitentür (3) vorragt.

2. Schiebeseitentürstruktur nach Anspruch 1, **dadurch gekennzeichnet, daß** die Seitentür (3) einen inneren bzw. Innenraum (11) in einem Inneren davon für ein wenigstens teilweises Aufnehmen der Fensterscheibe (6) aufweist, welche zurückgezogen ist, und mit einem Fensterregler (12) versehen ist, welcher arbeitet bzw. operativ ist, um das Fensterglas bzw. die Fensterscheibe (6) aus dem Innenraum (11) auszubringen und die Fensterscheibe (6) in den Innenraum (11) zurückzuziehen.

3. Schiebeseitentürstruktur nach Anspruch 1 oder 2, **dadurch gekennzeichnet, daß** die oberen und unteren körperseitigen Führungsschienen (10A, 10B) an einem rückwärtigen Kotflügelpaneel bzw. -blech (16), welches ein Teil der Fahrzeugseitenwand rückwärts benachbart der Seitentüröffnung ausbildet, und an einem Bodenpfosten bzw. -steher (2b) montiert sind, welcher jeweils die Seitentüröffnung (2) ausbildet.

4. Schiebeseitentürstruktur nach einem der vorangehenden Ansprüche 1 bis 3, **dadurch gekennzeichnet, daß** die oberen und unteren körperseitigen Führungsrollenanordnungen (7A, 7B) an einem rückwärtigen Seitenpfosten bzw. - steher (2c) montiert sind, welcher die Seitentüröffnung (2) unter einer oberen Kante bzw. einem oberen Rand der Seitentür (3) ausbildet.

5. Schiebeseitentürstruktur nach einem der vorangehenden Ansprüche 1 bis 4, **dadurch gekennzeichnet, daß** die oberen und unteren türseitigen Führungsschienen (8A, 8B) innerhalb des Inneren der Seitentür (3) installiert sind.

6. Schiebeseitentürstruktur nach einem der vorangehenden Ansprüche 1 bis 5, **dadurch gekennzeichnet, daß** die oberen und unteren türseitigen Führungsrollenanordnungen (9A, 9B) an der Seitentür (3) an Stellen nahe jeweils einer oberen Ecke eines rückwärtigen Endes bzw. einer oberen rückwärtigen Endecke und nach einer unteren Ecke eines vorderen Endes bzw. einer unteren vorderen Endecke montiert bzw. angeordnet sind.

## Revendications

1. Structure de portière latérale coulissante comprenant :
- une portière latérale (3) qui a une glace de fenêtre rétractable (6) pouvant être rétractée dans la portière latérale (3) et qui est montée avec faculté de coulissement sur au moins un côté d'une carrosserie de véhicule (1) pour un déplacement dans la direction longitudinale de la carrosserie de véhicule (1) entre une position fermée dans une ouverture de portière latérale (2) - formée comme une ouverture d'accès dans une paroi latérale de véhicule, dans laquelle une portion inférieure de l'ouverture de portière latérale (2) est fermée par la portière latérale (3) et dans laquelle une portion supérieure de l'ouverture de portière latérale (2) formant une ouverture de fenêtre de portière (4) est fermée lorsque la glace de fenêtre (6) est avancée entièrement depuis la portière latérale (3) et est ouverte lorsque la glace de fenêtre (6) est rétractée, partiellement ou entièrement, jusque dans la portière latérale (3) - et une position ouverte dans laquelle la portière latérale (3) s'étend le long d'une surface extérieure de la paroi latérale de véhicule pour dégager l'ouverture d'accès ; et
- un moyen de guidage de portière pour guider le mouvement de la portière latérale, le moyen de guidage de portière comprenant des pistes supérieure et inférieure de guidage latéral de carrosserie (10A, 10B) montées parallèlement l'une à l'autre sur la paroi latérale sur le véhicule avec une séparation verticale, et des assemblages supérieur et inférieur de roulettes de guidage latéral de portière (9A, 9B) montés de manière stationnaire à la portière latérale (3) et reliés respectivement avec faculté de coulissement aux pistes supérieure et inférieure de guidage latéral de carrosserie (10A, 10B),
**caractérisée en ce que** :
- les pistes supérieure et inférieure de guidage latéral de portière (8A, 8B) sont montées parallèlement l'une à l'autre sur la portière latérale (3) avec une séparation verticale, les assemblages supérieur et inférieur de roulettes de guidage latéral de carrosserie (7A, 7B) sont montés de manière stationnaire à la carrosserie et sont reliés respectivement avec faculté de coulissement aux pistes supérieure et inférieure de guidage latéral de portière (8A, 8B) ; et
- une bande d'étanchement (20, 24, 27) est prévue pour obturer hermétiquement l'ouverture de fenêtre de portière (4) fermée de manière étanche à l'eau par la glace de fenêtre (6) avancée depuis la portière latérale (3), ladite bande d'étanchement (20, 24, 27) étant montée à une partie de la carrosserie de véhicule (1) qui entoure l'ouverture de fenêtre de portière (4) de manière à être amenée jusque dans un contact fermé avec une bordure de la glace de fenêtre (6) lorsque la glace de fenêtre (6) est avancée depuis la portière latérale (3).

2. Structure de portière latérale coulissante selon la revendication 1, **caractérisée en ce que** la portière latérale (3) a un espace intérieur (11) dans un intérieur de celle-ci pour recevoir au moins partiellement la glace de fenêtre (6) rétractée et est prévue avec un régulateur de fenêtre (12) pouvant fonctionner pour avancer la glace de fenêtre (6) depuis l'espace intérieur (11) et rétracter la glace de fenêtre (6) jusque dans l'espace intérieur (11).

3. Structure de portière latérale coulissante selon l'une ou l'autre des revendications 1 et 2, **caractérisée en ce que** lesdites pistes supérieure et inférieure de guidage latéral de carrosserie (10A, 10B) sont montées respectivement sur un panneau d'aile arrière (16) formant respectivement une partie de la paroi latérale de véhicule adjacente vers l'arrière à l'ouverture de portière latérale et sur un jambage inférieur (2b) formant l'ouverture de portière latérale (2).

4. Structure de portière latérale coulissante selon l'une quelconque des revendications précédentes 1 à 3, **caractérisée en ce que** lesdits assemblages supérieur et inférieur de roulettes de guidage latéral de carrosserie (7A, 7B) sont montés sur un jambage latéral arrière (2c) formant l'ouverture de portière latérale (2) sous un bord supérieur de la portière latérale (3).

5. Structure de portière latérale coulissante selon l'une quelconque des revendications précédentes 1 à 4, **caractérisée en ce que** lesdites pistes supérieure et inférieure de guidage latéral de portière (8A, 8B) sont installées à l'intérieur de la portière latérale (3).

6. Structure de portière latérale coulissante selon l'une quelconque des revendications précédentes 1 à 5, **caractérisée en ce que** lesdits assemblages supérieur et inférieur de roulettes de guidage latéral de portière (9A, 9B) sont montés respectivement sur la portière latérale (3), à des emplacements à proximité d'un coin terminal arrière supérieur et à proximité d'un coin terminal avant inférieur.
